# EUROPÄISCHE PATENTSCHRIFT

(11) **EP 2 499 501 B1**
(45) Veröffentlichungstag und Bekanntmachung des Hinweises auf die Patenterteilung: **03.07.2013**
(21) Anmeldenummer: 10762647.5
(22) Anmeldetag: 01.10.2010
(51) Int. Cl.: G01N 35/04

(54) **VORRICHTUNG ZUR ENTNAHME VON BEHÄLTERN UND VERPACKUNGSANLAGE**
DEVICE FOR EXTRACTING CONTAINERS AND PACKAGING MACHINE
DISPOSITIF D'EXTRACTION DE CONTENANTS ET MACHINE D'EMBALLAGE

(30) Priorität: 12.11.2009 DE 102009046662
(43) Veröffentlichungstag der Anmeldung: 19.09.2012
(73) Patentinhaber: Robert Bosch GmbH, 70442 Stuttgart (DE)
(72) Erfinder: KRAUSS, Ulrich, 74532 Ilshofen (DE); HUMPFER, Steffen, 74589 Satteldorf (DE); WOLL, Axel, 70469 Stuttgart (DE); MUGELE, Tobias, 70619 Sillenbuch/Riedenberg (DE)
(86) Internationale Anmeldenummer: PCT/EP2010/064627
(87) Internationale Veröffentlichungsnummer: WO 2011/057862

(56) Entgegenhaltungen:
- WO-A1-2009/015862
- DE-A1-102007 048 684
- FR-A1- 2 867 861

## Beschreibung

### Stand der Technik

Die Erfindung betrifft eine Vorrichtung zur Entnahme von Behältern und eine Verpackungsanlage mit solcher Vorrichtung.

In der pharmazeutischen Verpackungsindustrie ist es bekannt, Behälter wie Spritzenkörper, Vials oder Ampullen auf kombinierten Füll- und Verschließanlagen zu verarbeiten. Hierbei werden die pharmazeutischen Behälter beispielsweise mit einem flüssigen Pharmazeutika befüllt, gewogen und anschließend mit einem Verschlusselement verschlossen. Im Rahmen des Produktionsprozesses bzw. der unterschiedlichen Bearbeitungsschritte werden die Behälter weiterhin verschiedenen Kontrollen unterzogen, um eine ordnungsgemäße Befüllung sowie einen ordnungsgemäßen Verschluss der Behälter zu gewährleisten. Sollte es hierbei zu Fehlern während der Verarbeitung der Behälter gekommen sein, so ist es erforderlich, die Behälter an einer geeigneten Station auszuschleusen.

Bekannt ist es, die Behälter aus einer die Behälter fördernden Fördereinrichtung direkt zu entnehmen. Das bedeutet, dass die dabei entstehenden Lücken bei der Entnahme der Behälter entweder mit "Gut-Behältern" aufgefüllt werden müssen, um bei nachfolgenden Verarbeitungsschritten keine Schwierigkeiten an den entsprechenden Stationen hervorzurufen, oder dass für die Zeit der Überprüfung bzw. Entnahme der Behälter aus der Fördereinrichtung die Fördereinrichtung angehalten werden muss. Dies ist insbesondere dann problematisch, wenn die Überprüfung bzw. das Ausschleusen der Behälter aus der Förderanlage relativ viel Zeit beansprucht.

Aus der DE 196 04 100 A1 ist ferner eine Handhabungseinrichtung bekannt, bei der insbesondere Spritzenkörper aus einem Aufnahmebehälter einzeln oder gemeinsam entnommen werden können, wobei der Aufnahmebehälter Aufnahmen für die Spritzenkörper aufweist.

DE 10 2007 048 684 A1 betrifft ein Laborsystem, welches im Wesentlichen aus einer Transporteinrichtung für Proben, wenigstens einer Behandlungseinrichtung zur Aufbereitung, Analyse und/oder Bearbeitung von Proben, wenigstens einem verfahrbaren Handhabungsgerät für das Handling der Proben im Bereich einer Behandlungseinrichtung sowie einem mit dem Handhabungsgerät mitfahrenden Überwachungssystem zur Einhaltung eines Sicherheitsabstands besteht. Das Überwachungssystem wird durch eine Kamera zur Erzeugung von Entfernungsbildern und/oder ein Ortungssystem mit wenigstens einem Sender und wenigstens einem Empfänger gebildet, wobei der Empfänger an der verfahrbaren Transporteinrichtung montiert und derart ausgebildet ist, dass er ein Alarmsignal erzeugt, wenn der wenigstens eine Sender einen Mindestabstand zum Empfänger unterschreitet.

Dieses Dokument offenbart eine Vorrichtung gemäß dem Oberbegriff des Anspruchs 1.

### Offenbarung der Erfindung

Ausgehend von dem dargestellten Stand der Technik liegt der Erfindung die Aufgabe zugrunde, eine Vorrichtung zur Entnahme von Behältern derart auszubilden, dass ein laufender Produktions- bzw. Förderprozess in der Verpackungsanlage möglichst wenig gestört wird. Diese Aufgabe wird bei einer Vorrichtung zur Entnahme von Behälter mit den Merkmalen des Anspruchs 1 gelöst. Der Erfindung liegt dabei die Idee zugrunde, durch eine Ausschleuseinrichtung Transportbehälter, die potenziell fehlerhafte Behälter enthalten, auf eine von einer ersten Transporteinrichtung getrennte bzw. separate zweite Transporteinrichtung zu überführen. Dadurch wird es ermöglicht, dass der Produktions- bzw. Transportfluss von Transportbehältern auf der ersten Fördereinrichtung nicht gestört wird, d.h. nachfolgende Transportbehälter mit "Gut-Behältnissen" weitertransportiert werden, ohne dass die betreffenden Transportbehälter ausgeschleust bzw. gestoppt werden.

Dadurch, dass sich der Transportbehälter mit den potenziell fehlerhaften Behältern auf der zweiten Transporteinrichtung befindet, kann die Überprüfung der Behälter in dem Transportbehälter auf der zweiten Transporteinrichtung prinzipiell beliebig lange dauern, ohne dass dies zu Nachteilen führt. Insbesondere können auch relativ aufwändige bzw. zeitintensive Tests an den Behältern durchgeführt werden.

Vorteilhafte Weiterbildungen der erfindungsgemäßen Vorrichtung zur Entnahme von Behältern sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In einer bevorzugten Ausführungsform der Erfindung ist es vorgesehen, dass im Bereich der zweiten Transporteinrichtung eine Einrichtung zur Entnahme und zum Transport einer Aufnahmeeinrichtung für eine Vielzahl von in Aufnahmen angeordneten Behälter aus dem Transportbehälter angeordnet ist, die die Aufnahmeeinrichtung zur Entnahme wenigstens eines Behälters aus dem Transportbehälter der Entnahmeeinrichtung zuführt. Dadurch wird eine hohe Flexibilität bezüglich der Anordnung der Entnahmeeinrichtung erzielt, so dass die Entnahme von Behältern räumlich von der Entnahme der Aufnahmeeinrichtungen getrennt ist.

Um sicherzustellen, dass die richtigen Behälter aus den Transportbehältern entnommen werden, ist es darüber hinaus in einer weiteren bevorzugten Ausführungsform der Erfindung vorgesehen, dass im Bereich der zweiten Transporteinrichtung eine zweite Identifikationseinrichtung angeordnet ist und, dass die zweite Identifikationseinrichtung mit der Entnahmeeinrichtung zur Entnahme mindestens eines Behälters aus dem Transportbehälter zusammenwirkt. Dadurch wird sichergestellt, dass nur solche Behälter aus dem Transportbehälter entnommen werden, welche mittels der ersten und der zweiten Identifikationseinrichtung als fehlerhaft identifiziert wurden.

Weiterhin ist in vorteilhafter Weise vorgesehen, dass im Bereich der zweiten Transporteinrichtung eine Ausschleuseinrichtung für Transportbehälter angeordnet ist. Diese Ausschleuseinrichtung dient dazu, Transportbehälter auszuschleusen, welche entweder von der ersten Fördereinrichtung direkt ausgeschleust werden, oder solche Transportbehälter auszuschleusen, welche selbst nach Umlauf über die zweite Fördereinrichtung noch als fehlerhaft identifiziert werden.

Insbesondere kann es vorgesehen sein, dass im Bereich der zweiten Transporteinrichtung eine Prüfeinrichtung, insbesondere eine Wiegeeinrichtung, angeordnet ist. Im Bereich der zweiten Transporteinrichtung können somit die Behälter, welche vorab als kritisch bzw. fehlerhaft identifiziert, oder vom Bediener oder von der Maschinensteuerung gezielt oder zufällig ausgewählt wurden, mittels geeigneter Prüfeinrichtungen überprüft werden. Hierdurch können die Produktionsschritte der Verpackungsanlage überprüft oder sichergestellt werden, dass keine Behälter ausgeschleust werden, die "gut" sind.

Ein einfaches Handling der Transportbehälter auf der ersten Transporteinrichtung und der zweiten Transporteinrichtung wird ermöglicht, wenn die beiden Transporteinrichtungen jeweils als Transportbänder ausgebildet sind, auf denen die Transportbehälter durch Reibschluss gefördert werden. Solche Transporteinrichtungen sind in der Montagetechnik bzw. in Fertigungsanlagen in vielfältigster Weise bekannt und ermöglichen beispielsweise durch den Einsatz von quer verlaufenden Förderbändern sowie in den Förderweg der Transportbehälter hineinragende Auslenk- oder Blockierelemente die Steuerung der Bewegung der Transportbehälter.

Um das Ergebnis der Überprüfung oder die Anzahl nicht fehlerhafter Behälter in dem Transportbehältnis zu dokumentieren oder sonstige Informationen aufbringen zu können, ist es in einer vorteilhaften Weiterbildung der Erfindung vorgesehen, dass im Bereich der ersten Transporteinrichtung eine Kennzeichnungseinrichtung für die in diesem Bereich transportierten Transportbehälter angeordnet ist.

Die erfindungsgemäße Vorrichtung zur Entnahme von Behältern ist bevorzugt Bestandteil einer Verpackungsanlage, welche eine Vielzahl von Bearbeitungsstationen aufweist. Hierbei schließt sich die erfindungsgemäße Vorrichtung bevorzugt ans Ende der Verpackungsanlage an, d.h., dass an dieser Stelle alle während des Produktionsprozesses der Behälter festgestellten Unregelmäßigkeiten bzw. Fehler an den Behältern dadurch berücksichtigt werden, dass die entsprechenden Behälter aus der Verpackungsanlage ausgeschleust werden. Hierzu ist es in einer bevorzugten Ausführungsform vorgesehen, dass die erste Identifikationseinrichtung der Vorrichtung mit einer Steuereinrichtung der Verpackungsanlage gekoppelt ist. Dadurch, dass in der Steuereinrichtung der Verpackungsanlage alle während des Produktionsprozesses der einzelnen Behälter aufgetretenen Fehler bzw. Daten gespeichert werden können, kann mit einer derartigen Merkmalskombination sichergestellt werden, dass alle potenziell fehlerhaften Behälter mittels der erfindungsgemäßen Vorrichtung ausgeschleust werden.

Weitere Vorteile und Merkmale der Erfindung ergeben sich aus der nachfolgenden Beschreibung bevorzugter Ausführungsbeispiele sowie anhand der Zeichnung. Diese zeigt in:
- Fig. 1: einen Transportbehälter zusammen mit in dem Transportbehälter in einer Aufnahmeeinrichtung angeordneten pharmazeutischen Behältern in perspektivischer Ansicht,
- Fig. 2: die Aufnahmeeinrichtung mit den pharmazeutischen Behältern gemäß der Fig. 1, ebenfalls in perspektivischer Ansicht,
- Fig. 3: eine erfindungsgemäße Vorrichtung zur Entnahme von Behältern in Draufsicht und
- Fig. 4: die Vorrichtung gemäß Fig. 3 in einer perspektivischen Darstellung.

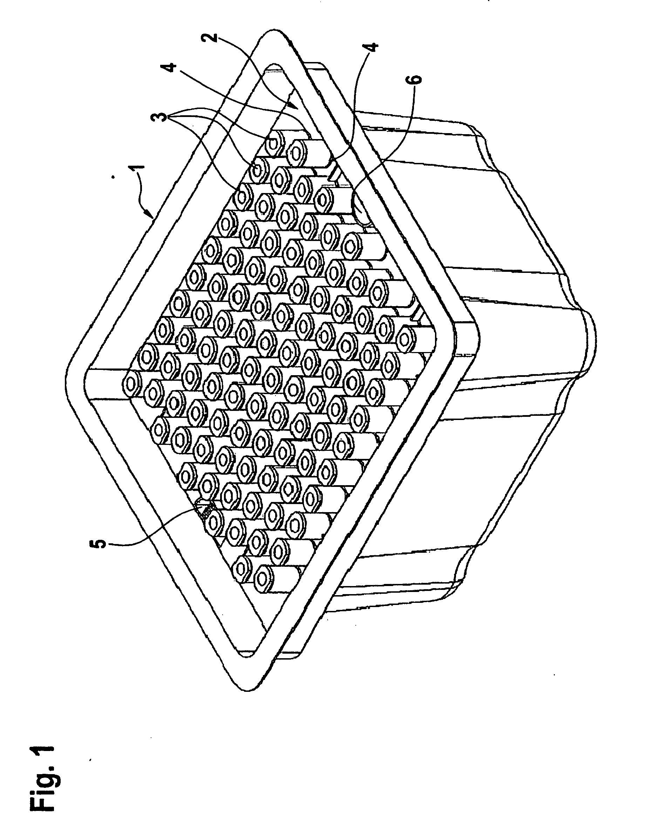

In der Fig. 1 ist ein Tansportbehälter 1, welcher in der pharmazeutischen Industrie auch als "Tub" bezeichnet wird, dargestellt. Der kistenartige Transportbehälter 1 dient zur Aufnahme einer Aufnahmeeinrichtung 2, welche auch als "Nest" bezeichnet wird. In der Aufnahmeeinrichtung 2 lassen sich eine Vielzahl von pharmazeutischen Behältern, insbesondere Spritzenkörper 3, anordnen bzw. transportieren, wobei entsprechende Aufnahmen 4 in der Aufnahmeeinrichtung 2 ausgebildet sind, die dazu dienen, die Spritzenkörper 3 formschlüssig aufzunehmen. Ferner erkennt man noch an zwei gegenüberliegenden Stirnseiten der Aufnahmeeinrichtung 2 Ausnehmungen 5, 6, welche dazu dienen, um mit einer Entnahmeeinrichtung (welche später noch näher erläutert wird) zusammenzuwirken, so dass eine Entnahme bzw. ein Anheben und Absenken der Aufnahmeeinrichtung 2 aus dem Transportbehälter 1 ermöglicht wird.

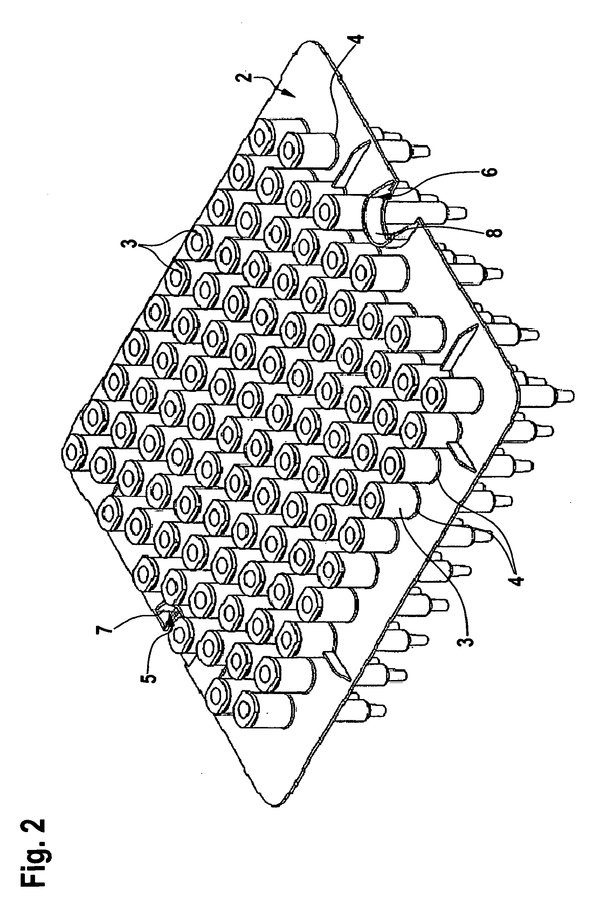

In der Fig. 2 ist die Aufnahmeeinrichtung 2 mitsamt den Spritzenkörpern 3 nochmals separat dargestellt. Hier erkennt man auch die insbesondere in Form von Ausschnitten 7, 8 ausgebildeten Ausnehmungen 5, 6. Ferner ist erkennbar, dass die Spritzenkörper 3 in etwa in ihrem mittleren Bereich formschlüssig mit den Aufnahmen 4 der Aufnahmeeinrichtung 2 zusammenwirken. Die Spritzenkörper 3 sind in der Aufnahmeeinrichtung 2 in mehreren Reihen angeordnet, wobei die einzelnen Reihen einen Versatz zueinander aufweisen und wobei die Spritzenkörper 3 innerhalb jeder Reihe in jeweils gleichmäßigem Abstand zueinander angeordnet sind.

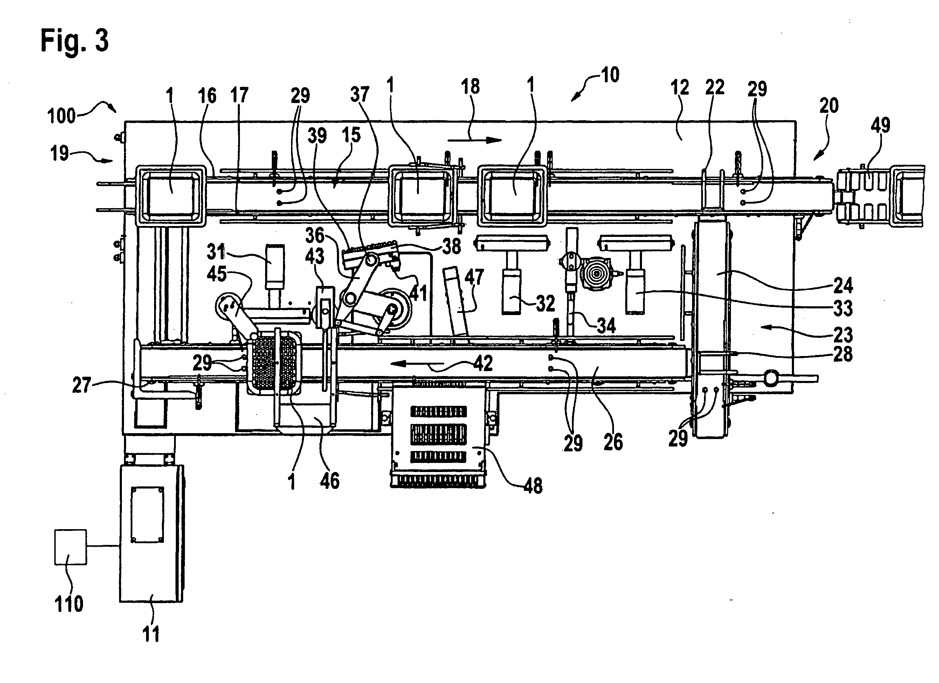

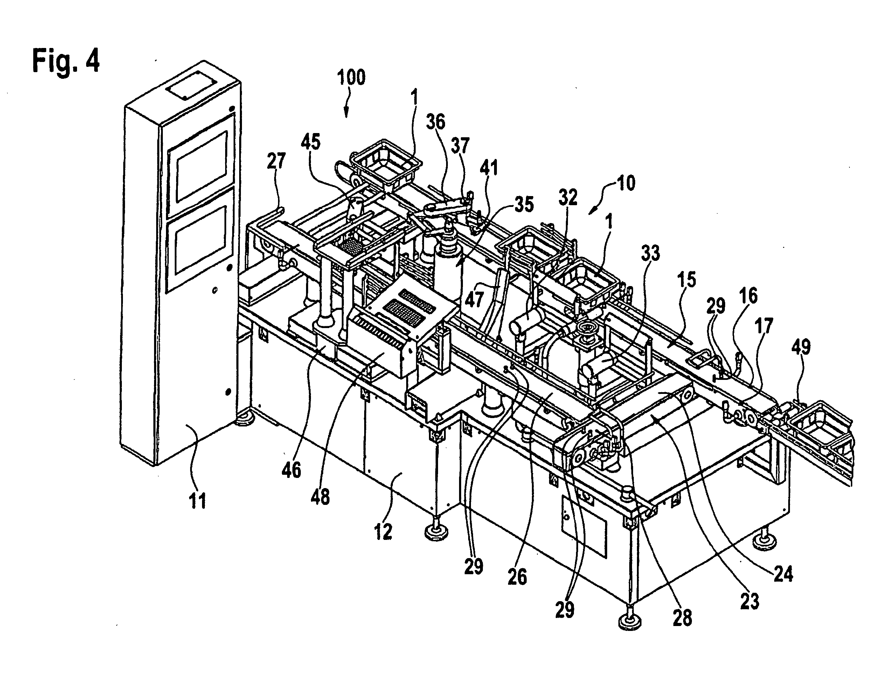

In den Fig. 3 und 4 ist eine erfindungsgemäße Vorrichtung 10 zur Entnahme von Spritzenkörpern 3 dargestellt. Die Vorrichtung 10 ist hierbei insbesondere Bestandteil einer im übrigen nicht näher dargestellten Verpackungsanlage 100, welche eine Vielzahl von ebenfalls nicht dargestellten Bearbeitungsstationen aufweist, auf denen die Spritzenkörper 3 einer Reihe von Bearbeitungs- bzw. Behandlungsschritten unterzogen werden, welche dazu dienen, die Spritzenkörper 3 zu befüllen und zu verschließen. Hierbei werden die Spritzenkörper 3 insbesondere mit einem flüssigen Pharmazeutika befüllt, welches jeweils möglichst genau eindosiert werden muss. Ferner ist es wesentlich, dass die Spritzenkörper 3 sorgfältig verschlossen werden, um den Eintritt beispielsweise von Keimen oder ähnlichem in die befüllten Spritzenkörper 3 zu vermeiden.

Um Spritzenkörper 3 auszusondern, welche im Laufe der Produktionsschritte innerhalb der Verpackungsanlage 100 beispielsweise entweder mit einer nicht richtigen Menge an Füllgut befüllt wurden, oder deren Verschlussstopfen oder ähnliches beispielsweise nicht korrekt auf die Spritzenkörper 3 aufgebracht wurde, schließt sich die Vorrichtung 10 insbesondere an das Ende der eigentlichen Verpackungsanlage 100 an. Die Vorrichtung 10 kann aber ausdrücklich auch dazu dienen, Spritzenkörper 3 lediglich zu Kontrollzwecken zu entnehmen, auch wenn diese vorher nicht als potentiell fehlerhaft eingruppiert wurden. Im Folgenden wird jedoch der Einfachheit halber von potentiell fehlerhaften Spritzenkörpern 3 gesprochen.

Die Verpackungsanlage 100 weist eine Steuereinrichtung 110 auf, welche alle während des Produktionsprozesses an den einzelnen Spritzenkörpern 3 aufgetretenen potenziellen Fehler erfasst und abspeichert. Die Steuereinrichtung 110 der Verpackungsanlage 100 ist hierbei mit einer Steuereinrichtung 11 der Vorrichtung 10 verbunden. Insbesondere werden mittels der Steuereinrichtung 110 der Verpackungsanlage 100 Daten über potenziell fehlerhafte Spritzenkörper 3 an die Steuereinrichtung 11 der Vorrichtung 10 übermittelt.

Die Vorrichtung 10 weist ein Gestell bzw. eine Tischplatte 12 auf. Entlang einer Längsseite der Tischplatte 12 erstreckt sich eine erste Förder- bzw. Transporteinrichtung 15, welche beispielhaft zwei parallel zueinander beabstandete Fördergurte 16 und 17 aufweist, auf denen die Transportbehälter 1 durch Reibschluss insbesondere kontinuierlich gefördert werden. Hierbei ist mit dem Pfeil 18 (Fig. 3) die Förderrichtung der Transportbehälter 1 zwischen einem Eintrittsbereich 19 der Vorrichtung 10 und einem Austrittsbereich 20 aus der Vorrichtung 10 bezeichnet.

Die erste Transporteinrichtung 15 wirkt über eine erste Überschiebeeinheit 22 mit einer zweiten Transporteinrichtung 23 zusammen. Die zweite Transporteinrichtung 23 umfasst ein Ausschleusband 24, welches quer zur ersten Transporteinrichtung 15 am Ende der Tischplatte 12 nahe des Austrittsbereichs 20 angeordnet ist. Parallel zur ersten Transporteinrichtung 15 ist ein weiteres Transportband 26 angeordnet, welches ebenfalls Bestandteil der zweiten Transporteinrichtung 23 ist. Das Transportband 26 erstreckt sich nahezu über die gesamte Länge der Vorrichtung 10 und weist an seinem Ende eine wiederum rechtwinklig zum Transportband 26 angeordnete Überschubeinheit 27 auf.

Wesentlich ist noch, dass fluchtend mit dem Transportband 26 im Bereich des Ausschleusbandes 24 eine zweite Überschiebeeinheit 28 angeordnet ist.

Im Bereich der ersten Transporteinrichtung 15 und der zweiten Transporteinrichtung 23 sind mehrere auf- und abbewegbare Sperrelemente 29 angeordnet, welche dazu dienen, die Bewegung eines Transportbehälters 1 auf den Transporteinrichtungen 15 und 23 zu stoppen. Die soweit bezeichneten und beschriebenen Transporteinrichtungen 15 und 23 sind aus der Fördertechnik bereits allgemein bekannt, so dass auf deren genaue Funktionsweise an dieser Stelle nicht näher eingegangen wird. Zwischen der ersten Transporteinrichtung 15 und dem Transportband 26 sind beispielhaft drei Kameras 31 bis 33 auf der Tischplatte 12 angeordnet. Hierbei dient jede der Kameras 31 bis 33 dazu, einen beispielsweise an einer Seitenwand des Transportbehälters 1 angeordneten Code oder ein dort angeordnetes Schild zu erfassen (nicht dargestellt) und mit innerhalb der Steuereinrichtung 11 der Vorrichtung 10 abgelegten Informationen zu vergleichen.

Hierbei ist die erste Kamera 32 zur Identifikation von auf der ersten Transporteinrichtung 15 transportierten Transportbehältern 1 vorgesehen, während die zweite Kamera 33 zur Kontrolle des Aufdruckes durch einen Druckkopf 34 auf den Transportbehälter 1 dient. Durch die Kamera 31 erfolgt eine Identifikation von auf dem Transportband 26 befindlichen Transportbehältern 1. Zwischen den beiden Kameras 32 und 33 ist im Bereich des Transportbandes 15 weiterhin der Druckkopf 34 angeordnet, mittels dessen Hilfe Informationen, welche mittels der Kameras 31 bis 33 erfasst werden, entweder zu aktualisieren, oder aber neue Informationen z.B. durch ein Druckbild aufzubringen.

In etwa im mittleren Bereich der Tischplatte 12 ist ein Handhabungsroboter 35 angeordnet, welcher an einem Ende eines Arms 36 ein in einer vertikalen Achse 37 schwenkbares Kombiwerkzeug 38 aufweist. Das Kombiwerkzeug 38 weist hierbei eine Block- bzw. längliche Form auf, wobei an der einen Seite des Kombiwerkzeugs 38 eine Vielzahl von Greifeinheiten 39 angeordnet ist, während auf der den Greifeinheiten 39 gegenüberliegenden Seite des Kombiwerkzeugs 38 an einem Endbereich ein einzelnes Greifwerkzeug 41 angeordnet ist. Während sich mit den Greifeinheiten 39 eine komplette Reihe von Spritzenkörpern 3 aus der Aufnahmeeinrichtung 2 oder eine Teilmenge davon entnehmen lässt, dient das Greifwerkzeug 41 dazu, einen einzelnen Spritzenkörper 3 aus der Aufnahmeeinrichtung 2 zu entnehmen.

An den Handhabungsroboter 35 schließt sich in der mit dem Pfeil 42 in der Fig. 3 bezeichneten Förderrichtung der Transportbehälter 1 auf dem Transportband 26 eine Anhebeeinheit 43 zum Anheben einer kompletten Reihe von Spritzenkörpern 3 aus der Aufnahmeeinrichtung 2 an. An diese Anhebeeinrichtung 43 schließt sich ebenfalls in Förderrichtung betrachtet eine Aushebeeinrichtung 45 mit einem Transportrahmen 46 an. Mittels der Aushebeeinrichtung 45 lässt sich eine komplette Aufnahmeeinrichtung 2 aus dem Transportbehälter 1 entnehmen und auf den Transportrahmen 46 absetzen. Der Transportrahmen 46 wiederum führt die vereinzelte Aufnahmeeinrichtung 2 in den Bereich der Anhebeeinheit 43.

Ferner erkennt man auf der Tischplatte 12 noch einen Auswurfbehälter 47 für als fehlerhaft erkannte Spritzenkörper 3 sowie eine Einheit 48, mittels der komplette Reihen von Spritzenkörpern 3 zum manuellen Nachwiegen eines Spritzenkörpers 3 oder einer Behälterreihe entnommen werden können. Nicht dargestellt, aber optional vorgesehen, können im Bereich des Handhabungsroboters 35 noch Prüfeinrichtungen, insbesondere Wiegeeinrichtungen, angeordnet sein, um einzelne oder mehrere Spritzenkörper 3 hinsichtlich der korrekten Füllmenge zu überprüfen.

Die soweit beschriebene Vorrichtung 10 arbeitet wie folgt: Von der Steuereinrichtung 110 der Verpackungsanlage 100 werden der Steuereinrichtung 11 der Vorrichtung 10 die Daten hinsichtlich potenziell fehlerhafter Spritzenkörper 3 übermittelt. Insbesondere werden hierbei die Daten bzw. ein Bild des an dem Transportbehälter 1 aufgedruckten Identifikationsmerkmals übermittelt, aus dem hervorgeht, welcher Transportbehälter 1 und welche in dem Transportbehälter 1 angeordneten Spritzenkörper 3 potenziell fehlerhaft sind. Die in gleichmäßigen oder ungleichmäßigen Abständen auf der ersten Transporteinrichtung 15 geförderten Transportbehälter 1 gelangen.zunächst in den Aufnahmebereich der ersten Kamera 32, wo dieser mittels der Sperrelemente 29 an der weiteren Förderung gehindert wird. Mit der Kamera 32 wird die Identifikation des Transportbehälters 1 vorgenommen und mit dem in der Steuereinrichtung 11 abgelegten Bild bzw. mit den dort abgelegten Informationen verglichen. Sollte es sich dabei herausstellen, dass der betreffende Transportbehälter 1 keine potenziell fehlerhaften Spritzenkörper 3 enthält, so gelangt der Transportbehälter 1 im weiteren Verlauf unmittelbar an den Druckkopf 34, um mittels diesem optional Informationen auf den Transportbehälter 1 aufzubringen. Wird der Aufdruck im Anschluss durch die Kamera 33 als lesbar bestätigt, erfolgt kein Überschub durch die erste Überschiebeeinheit 22 auf das Ausschleusband 24. Vielmehr lassen die Sperrelemente 29 den Transportbehälter 1 beispielsweise auf ein Rollenband 49 passieren.

Sollte es sich demgegenüber bei dem Transportbehälter 1 um einen Transportbehälter 1 handeln, welcher potenziell fehlerhafte Spritzenkörper 3 enthält, oder bei dem eine Prüfung der Spritzenkörper 3 erfolgen soll, oder der nicht identifiziert werden konnte oder der Identifikationsaufdruck nicht korrekt ist, so wird der betreffende Transportbehälter 1 von der ersten Transporteinrichtung 15 auf das Ausschleusband 24 übergeschoben. Wurde der Transportbehälter 1 identifiziert (und sind potentiell fehlerhafte Spritzenkörper 3 daraus zu entnehmen oder eine Prüfung durchzuführen), so wird der Transportbehälter 1 von der zweiten Überschiebeeinheit 28 am Ausschleusband 24 auf das Transportband 26 übergeschoben. Ansonsten lassen die Sperrelemente 29 den Transportbehälter 1 durchlaufen, so dass dieser komplett ausgeschleust wird. Auf dem Transportband 26 gelangt der Transportbehälter 1 zur erneuten Identifikation mittels der Kamera 31. Dort wird der entsprechende Transportbehälter 1 nochmals identifiziert, um sicherzustellen, dass es sich bei dem Transportbehälter 1 um denjenigen Transportbehälter 1 handelt, welcher bereits mit der Kamera 32 als potenziell fehlerhafte Spritzenkörper 3 enthaltender Transportbehälter 1 identifiziert wurde. Mittels der Aushebeeinrichtung 45 gelangt die Aufnahmeeinrichtung 2 auf den Transportrahmen 46. Der Transportrahmen 46 fördert die entnommene Aufnahmeeinrichtung 2 in den Bereich der Anhebeeinheit 43, wo die entsprechende Reihe von Spritzenkörpern 3 aus der Aufnahmeeinrichtung 2 angehoben wird, um anschließend mittels des Handhabungsroboters 35 bzw. des Kombiwerkzeugs 38 den bzw. die potenziell fehlerhaften Spritzenkörper 3 zu entnehmen. Es besteht nun die Möglichkeit, dass der bzw. die potenziell fehlerhaften Spritzenkörper 3 auf einer nicht dargestellten Prüfeinrichtung überprüft werden, und beim Feststellen eines Fehlers der oder die betreffenden Spritzenkörper 3 in den Ausscheidebehälter 47 überführt werden. Sollte dies geschehen, so ist es auch denkbar bzw. möglich, innerhalb der Vorrichtung 10 bevorratete "Gut"-Spritzenkörper 3 in die entsprechende Aufnahmen 5 der Aufnahmeeinrichtung 2 zu überführen, so dass die Aufnahmeeinrichtung 2 vollständig mit potenziell fehlerfreien Spritzenkörpern 3 befüllt ist.

Die so behandelte Aufnahmeeinrichtung 2 kann anschließend wieder mittels des Transportrahmens 46 und der Aushebeeinrichtung 45 in den Transportbehälter 1 eingesetzt werden, worauf anschließend der betreffende Transportbehälter 1 mittels der Überschiebeeinheit 27 wieder in den Produktionsfluss bzw. in eine Lücke auf der ersten Transporteinrichtung 15 übergeschoben wird.

Wesentlich ist noch, dass diejenigen Transportbehälter 1, welche auch nach mehrmaligem Umlauf in der Vorrichtung 10 nicht identifiziert worden sind, bei denen eine Prüfung fehlgeschlagen ist oder der Aufdruck des Druckkopfes 34 nicht lesbar ist nur an einem Ort ausgeschleust werden, nämlich über das Ausschleusband 24.

Die soweit beschriebene Vorrichtung 10 kann in vielfältiger Art und Weise modifiziert bzw. abgewandelt werden. So ist die Vorrichtung 10 nicht auf die Verwendung der beschriebenen Transporteinrichtungen 15 und 23 beschränkt, sondern kann auch andersartig ausgebildete Transporteinrichtungen aufweisen. Wesentlich ist lediglich, dass neben dem Hauptförderweg für die Transportbehälter 1 eine Umleitung in Art eines "Bypass" geschaffen wird, welcher der Kontrolle und Ausschleusung von potenziell fehlerhaften oder zu überprüfenden Spritzenkörpern 3 dient, wobei anstelle von Spritzenkörpern 3 selbstverständlich auch andere Behälter verarbeitet werden können. Durch eine modifizierte Anordnung der Kameras 31 bis 33 bzw. anderer geeigneter Identifizierungseinrichtungen ist es möglich, die Transportbehälter 1 unabhängig von dem Ort eines Identifikationsmerkmals zu erkennen. Ebenso ist es denkbar, den Druckkopf 34 derart anzuordnen, dass ein Stausdruck auf jeder Seite des Transportbehälters 1 möglich ist.

## Patentansprüche

1. Vorrichtung (10) zur Entnahme von Behältern (3), insbesondere von pharmazeutischen Behältern (3), aus einer die Behälter (3) in Transportbehältern (1) fördernden ersten Transporteinrichtung (15), mit einer am Transportweg der ersten Transporteinrichtung (15) angeordneten ersten Identifikationseinrichtung (32) zur Identifikation der Transportbehälter (1), **dadurch gekennzeichnet, daß** die Vorrichtung eine der ersten Identifikationseinrichtung (32) nachgeordnete Ausschleuseinrichtung (24), die einen Transportbehälter (1) auf eine zweite Transporteinrichtung (23) überführt, an deren Förderstrecke eine Entnahmeeinrichtung (35) zur Entnahme wenigstens eines Behälters (3) angeordnet ist, und eine Einschleuseinrichtung (27) zum Wiedereinschleusen des Transportbehälters (1) in die erste Fördereinrichtung (15), umfasst.

2. Vorrichtung nach Anspruch 1,
**dadurch gekennzeichnet,**
**dass** im Bereich der zweiten Transporteinrichtung (23) eine Einrichtung (45, 46) zur Entnahme und zum Transport einer Aufnahmeeinrichtung (2) für eine Vielzahl von in Aufnahmen (4) angeordneten Behältern (3) aus dem Transportbehälter (1) angeordnet ist, die die Aufnahmeeinrichtung (2) zur Entnahme wenigstens eines Behälters (3) aus dem Transportbehälter (1) der Entnahmeeinrichtung (43) zuführt.

3. Vorrichtung nach einem der Ansprüche 1 bis 2,
**dadurch gekennzeichnet,**
**dass** im Bereich der zweiten Transporteinrichtung (23) eine zweite Identifikationseinrichtung (31) angeordnet ist und, dass die zweite Identifikationseinrichtung (31) mit der Entnahmeeinrichtung (35) zur Entnahme wenigstens eines Behälters (3) zusammenwirkt.

4. Vorrichtung nach einem der Ansprüche 1 bis 3,
**dadurch gekennzeichnet,**
**dass** im Bereich der zweiten Transporteinrichtung (23) eine Ausschleuseinrichtung (28) für Transportbehälter (1) angeordnet ist.

5. Vorrichtung nach einem der Ansprüche 1 bis 4,
**dadurch gekennzeichnet,**
**dass** im Bereich der zweiten Transporteinrichtung (23) eine Prüfeinrichtung, insbesondere eine Wiegeeinrichtung angeordnet ist.

6. Vorrichtung nach einer der Ansprüche 1 bis 5,
**dadurch gekennzeichnet,**
**dass** die erste und die zweite Transporteinrichtung (15, 23) jeweils als Transportbänder ausgebildet sind.

7. Vorrichtung nach einem der Ansprüche 1 bis 6,
**dadurch gekennzeichnet,**
**dass** die Vorrichtung (10) lediglich eine einzige Ausschleuseinrichtung (49) aufweist.

8. Vorrichtung nach einem der Ansprüche 1 oder 7,
**dadurch gekennzeichnet,**
**dass** im Bereich der ersten Transporteinrichtung (15) eine Kennzeichnungseinrichtung (34) für die im Bereich der ersten Transporteinrichtung (15) transportierten Transportbehälter (1) angeordnet ist.

9. Verpackungsanlage (100) mit einer Vorrichtung (10) nach einem der Ansprüche 1 bis 8,
**dadurch gekennzeichnet,**
**dass** die erste Identifikationseinrichtung (31) der Vorrichtung (10) zumindest mittelbar mit einer Steuereinrichtung (110) der Verpackungsanlage (100) gekoppelt ist.

## Claims

1. Apparatus (10) for removing containers (3), in particular pharmaceutical containers (3), from a first transporting device (15), which conveys the containers (3) in transporting containers (1), having a first identification device (32), which is arranged on the transporting path of the first transporting device (15) and is intended for identifying the transporting containers (1), **characterized in that** the apparatus comprises a discharging device (24), which is arranged downstream of the first identification device (32) and transfers a transporting container (1) onto a second transporting device (23), on the conveying route of which is arranged a removal device (35) for removing at least one container (3), and also comprises an introduction device (27), for reintroducing the transporting container (1) into the first conveying device (15).

2. Apparatus according to Claim 1,
**characterized**
**by** the arrangement, in the region of the second transporting device (23), of a device (45, 46) which is intended for removing from the transporting container (1), and for transporting, an accommodating device (2), for accommodating a multiplicity of containers (3) arranged in holders (4), and which feeds the accommodating device (2) to the removal device (43) in order for at least one container (3) to be removed from the transporting container (1).

3. Apparatus according to either of Claims 1 and 2,
**characterized**
**in that** a second identification device (31) is arranged in the region of the second transporting device (23), and in that the second identification device (31) interacts with the removal device (35) for the removal of at least one container (3).

4. Apparatus according to at least one of Claims 1 to 3,
**characterized**
**in that** a device (28) for discharging transporting containers (1) is arranged in the region of the second transporting device (23).

5. Apparatus according to one of Claims 1 to 4,
**characterized**
**in that** a testing device, in particular a weighing device, is arranged in the region of the second transporting device (23).

6. Apparatus according to one of Claims 1 to 5,
**characterized**
**in that** the first and the second transporting device (15, 23) are each designed as transporting belts.

7. Apparatus according to one of Claims 1 to 6,
**characterized**
**in that** the apparatus (10) has merely a single discharging device (49).

8. Apparatus according to either of Claims 1 and 7,
**characterized by**
the arrangement, in the region of the first transporting device (15), of device (34) for marking the transporting containers (1) transported in the region of the first transporting device (15).

9. Packaging installation (100) having an apparatus (10) according to one of Claims 1 to 8,
**characterized**
**in that** the first identification device (31) of the apparatus (10) is coupled at least indirectly to a control device (110) of the packaging installation (100).

## Revendications

1. Dispositif (10) pour l'extraction de contenants (3), en particulier de contenants pharmaceutiques (3), à partir d'un premier dispositif de transport (15) transportant les contenants (3) dans des contenants de transport (1), comprenant un premier dispositif d'identification (32) disposé sur la voie de transport du premier dispositif de transport (15) pour l'identification des contenants de transport (1), **caractérisé en ce que** le dispositif comprend un dispositif de décharge (24) disposé en aval du premier dispositif d'identification (32), qui transfère un contenant de transport (1) à un deuxième dispositif de transport (23), sur la section de transport duquel est disposé un dispositif d'extraction (35) pour l'extraction d'au moins un contenant (3), et un dispositif d'amenée (27) pour réintroduire le contenant de transport (1) dans le premier dispositif de transport (15).

2. Dispositif selon la revendication 1,
**caractérisé en ce**
**qu'**un dispositif (45, 46) pour extraire et transporter hors du contenant de transport (1) un dispositif de réception (2) pour une pluralité de contenants (3) disposés dans des logements (4) est disposé dans la région du deuxième dispositif de transport (23), lequel achemine le dispositif de réception (2) pour l'extraction d'au moins un contenant (3) hors du contenant de transport (1) jusqu'au dispositif d'extraction (43).

3. Dispositif selon l'une quelconque des revendications 1 à 2,
**caractérisé en ce que**
dans la région du deuxième dispositif de transport (23) est disposé un deuxième dispositif d'identification (31) et **en ce que** le deuxième dispositif d'identification (31) coopère avec le dispositif d'extraction (35) pour extraire au moins un contenant (3).

4. Dispositif selon l'une quelconque des revendications 1 à 3,
**caractérisé en ce**
**qu'**un dispositif de décharge (28) pour des contenants de transport (1) est disposé dans la région du deuxième dispositif de transport (23).

5. Dispositif selon l'une quelconque des revendications 1 à 4,
**caractérisé en ce**
**qu'**un dispositif de contrôle, en particulier un dispositif de pesée, est disposé dans la région du deuxième dispositif de transport (23).

6. Dispositif selon l'une quelconque des revendications 1 à 5,
**caractérisé en ce que**
le premier et le deuxième dispositif de transport (15, 23) sont réalisés à chaque fois sous forme de bandes transporteuses.

7. Dispositif selon l'une quelconque des revendications 1 à 6,
**caractérisé en ce que**
le dispositif (10) présente seulement un dispositif de décharge unique (49).

8. Dispositif selon l'une quelconque des revendications 1 ou 7,
**caractérisé en ce**
**qu'**un dispositif de caractérisation (34) pour les contenants de transport (1) transportés dans la région du premier dispositif de transport (15) est disposé dans la région du premier dispositif de transport (15).

9. Installation d'emballage (100) comprenant un dispositif (10) selon l'une quelconque des revendications 1 à 8,
**caractérisée en ce que**
le premier dispositif d'identification (31) du dispositif (10) est accouplé au moins de manière indirecte à un dispositif de commande (110) de l'installation d'emballage (100).
